# FASCICULE DE BREVET EUROPEEN

(11) **EP 3 057 717 B1**
(45) Date de publication et mention de la délivrance du brevet: **11.03.2020**
(21) Numéro de dépôt: 14796815.0
(22) Date de dépôt: 14.10.2014
(51) Int. Cl.: B05D 5/02, B05D 7/00, C09D 5/28, C09D 7/65, C09D 7/40, B05D 5/06, B05D 7/14, C08L 77/00

(54) **PROCEDE DE PEINTURE DE VEHICULE AUTOMOBILE**
LACKIERVERFAHREN FÜR KRAFTFAHRZEUG
MOTOR VEHICLE PAINTING PROCESS

(30) Priorité: 14.10.2013 FR 1359962
(43) Date de publication de la demande: 24.08.2016
(73) Titulaire: PSA Automobiles SA, 78300 Poissy (FR)
(72) Inventeur: VIEU, Antoine, F-78480 Verneuil sur Seine (FR); MORAUX, Sebastien, 78280 Guyancourt (FR)
(74) Mandataire: Fernandez, Francis Lionel
(86) Numéro de dépôt international: PCT/FR2014/052618
(87) Numéro de publication internationale: WO 2015/055947

(56) Documents cités:
- DE-A1- 19 750 451
- DE-A1- 19 810 900
- US-A1- 2009 035 540
- "Dupont ChromaClear 2370S Flexible Matted Clearcoat", , 1 janvier 2007 (2007-01-01), XP55168681, Extrait de l'Internet: URL:http://search.proquest.com/docview/455 735530 [extrait le 2015-02-10]
- "Flexible Matted clear coat 2370S safety data sheet", , 5 mai 2013 (2013-05-05), XP55168690, Extrait de l'Internet: URL:http://dpcprd.asp.dupont.com/dpc/en/ca /html/prodinfo/daf/CDN_Unique/2014_MSDS/cr omax_en/2370S_MSDS_E.pdf [extrait le 2015-02-10]

## Description

La présente invention concerne un procédé de peinture de véhicule automobile, et plus particulièrement un procédé de peinture de véhicule automobile conférant une finition mate.

De manière traditionnelle dans l'industrie automobile, les carrosseries présentent une finition lisse et brillante. Depuis plusieurs années maintenant, on propose également des véhicules automobiles dont la finition est mate ou satinée, mais toujours d'aspect lisse.

Cependant, que la peinture soit brillante ou mate, un inconvénient majeur d'une finition lisse est l'absence de tolérance aux défauts d'aspect et donc aux défauts des surfaces. Par ailleurs, une finition lisse entraîne également une fragilité à l'usage du fait d'une grande sensibilité aux rayures notamment.

Lors de la fabrication de véhicules automobiles avec une finition brillante et lisse, il est possible de procéder à des retouches en ligne de la surface lorsque celle-ci présente des défauts tels que des poussières, des piqûres, des cratères, etc...Ainsi, on procède par exemple à une retouche en ligne de type ponçage-lustrage.

Cependant dans le cas d'une peinture mate, de telles solutions de retouches en ligne ne sont pas possibles, ce qui rend la production industrielle de ce type de véhicule à finition mate, limitée à peu de véhicules par jour.

De manière à limiter les défauts d'aspect de surface, on a proposé dans WO 2008/070267 d'appliquer sur un substrat, une couche de nivelage permettant de limiter les défauts d'aspect de surface, puis une couche de métal décoratif par exemple, puis un vernis de finition pouvant comporter des particules pour conférer un aspect décoratif final. Bien que permettant de limiter les défauts d'aspect, un tel procédé nécessite de nombreuses étapes et notamment celle du nivelage, et reste donc complexe et onéreux à mettre en œuvre d'un point de vue industriel.

Par DE 10 2008 029 580, on propose un procédé de fabrication de revêtement comprenant une étape d'application sur un substrat tel qu'une bande de métal, d'une composition aqueuse contenant un agent de matage, durcissable sous faisceau électronique, suivie d'une étape de chauffage de la composition sur le substrat puis d'une étape de durcissement sous faisceau électronique. L'étape de chauffage est réalisée par infra-rouges avant l'étape de durcissement. Un tel procédé s'il est applicable à des bandes de métal reste onéreux à mettre en œuvre du fait de la complexité des moyens mis en œuvre (infra-rouges, faisceau électronique). Ce procédé est spécifiquement orienté vers la fabrication de bandes de métal mises ensuite en bobines.

On connaît de DE 198 10 900, l'utilisation de composition de revêtement renfermant une pâte comprenant des moyens de matage et/ou de texture pour réaliser des pièces de voiture comme le châssis ou des pièces extérieures comme le pare-chocs et dont on souhaite limiter l'aspect brillant.

Aucun des documents de l'état de la technique ne prévoit un procédé de peinture de la caisse d'un véhicule à finition mate.

La présente invention a pour but de proposer un procédé de peinture de véhicule automobile permettant l'application d'une peinture mate, dans lequel la nécessité de faire des retouches liées aux défauts d'aspect a été considérablement diminuée voire éliminée, et qui ne nécessite donc plus de gamme de retouche en ligne. De plus, un tel procédé de peinture doit être simple à mettre en œuvre d'un point de vue industriel de manière à permettre une augmentation de la production industrielle de véhicule à peinture mate.

L'invention propose de ce fait un procédé de peinture de caisse de véhicule automobile, ladite caisse présentant des défauts de surface, le procédé comprenant au moins les étapes selon lesquelles on applique à une caisse de véhicule au moins une base conférant la teinte, puis on applique un vernis comprenant des agents matants conférant une finition mate et des agents de texture, caractérisé en ce qu'on utilise un vernis liquide renfermant en tant qu'agents de texture des billes de polyamide qui sont solides, générant un relief à la surface du film peinture, créant la finition d'aspect texturé qui masque des défauts de surface de ladite caisse.

De manière très avantageuse, le procédé selon l'invention permet de conférer à un véhicule automobile, une finition par vernis d'aspect mat et texturé qui permet de masquer les défauts d'aspect de surface, donc ne nécessitant pas de retouches liées à ces défauts et ce, à l'aide d'un procédé de peinture simple, consistant à appliquer sur la base teintée ordinaire, une couche de vernis de finition mate à éléments ou agents de texture, sur un véhicule.

On évite ainsi d'avoir à retoucher cette peinture en cas de défauts de surface, ceux-ci se retrouvant masqués dans la texture du vernis de finition. On entend par agent ou élément de texture ou encore agent texturant, un agent permettant cet effet texturé de la finition par vernis. Cet effet texturé de la finition confère un relief en surface (absorbant les défauts) et un aspect mat à la peinture.

Ainsi, de manière avantageuse, un tel véhicule présente une peinture dont l'aspect extérieur est mat mais également texturé, c'est-à-dire comportant un effet de matière, de reliefs et donc non lisse qui permet de minimiser une grande partie des problèmes liés à l'exploitation des produits et installations peinture : grains, cratères, peau d'orange, défauts d'application. De manière avantageuse, en appliquant cette peinture puis en revêtant celle-ci d'un vernis renfermant des particules conférant un effet mat et un effet texturé, on absorbe la majeure partie des défauts de surface de la caisse, liés par exemple aux poussières.

Le procédé selon l'invention permet donc de masquer les défauts de surface sans qu'il soit besoin de préparer la surface de la caisse pour la rendre la plus exempte de défauts et permet en outre d'éviter ainsi toutes opérations de retouche de la peinture mate.

Ainsi, les éléments de texture ou agents texturants confèrent à la fois un aspect décoratif comme cela est connu, mais en outre de manière surprenante, en les utilisant avec une peinture mate, ils permettent de supprimer dans le processus industriel de peinture mate, les étapes de retouche en ligne liées aux défauts de surface.

De préférence, on utilise en tant qu'agents de texture des billes de polyamide qui sont solides. Ces billes ne fondent pas lors de la cuisson. De préférence, ces agents texturants sont constitués de deux types de particules dont les granulométries sont typiquement les suivantes :
Particule 1 : granulométrie D10∼15µm ; D50∼41µm ; D90∼75µm
Particule 2 : granulométrie D10∼19µm ; D50∼51µm ; D90∼91µm.

Ce qui revient à exprimer de manière classique une répartition granulométrique signifiant :
pour la particule 1 que 10% des particules ont un diamètre inférieur à 15 µm, 50% des particules ont un diamètre inférieur à 41 µm et 90% des particules ont un diamètre inférieur à 75 µm, et
pour la particule 2 que 10% des particules ont un diamètre inférieur à 19 µm, 50% des particules ont un diamètre inférieur à 51 µm et 90% des particules ont un diamètre inférieur à 91 µm.

Ces agents ou éléments de texture, de préférence des billes de polyamide, représentent pour la particule 1, 5 à 8% en poids total du vernis et pour la particule 2, 5 à 8% en poids total du vernis tandis que les éléments ou agents matants tels que la silice représentent 3 à 5% en poids total du vernis.

L'effet texturé est ainsi obtenu par addition de ces éléments ou agents de texture solides dans le vernis de finition contenant les agents matants. Ce vernis étant liquide et les agents de texture ne fondant pas lors de la cuisson du vernis, un relief à la surface du film peinture est ainsi procuré, créant la finition d'aspect texturée.

Un tel vernis spécifique s'applique dans le processus peinture, avec les moyens de pulvérisation série et un circuit de distribution dédié, en lieu et place d'un vernis liquide brillant traditionnel.

Les agents matants peuvent être de type connu en soi. De préférence, ces agents matants sont constitués de silice, par exemple sous forme pulvérulente.

Le vernis utilisé est du type mono ou bi-composants à savoir une résine et éventuellement un durcisseur qui sont mélangés juste avant l'application et constitués pour les résines de polymères de type acrylique-mélamine, polyesters et de durcisseurs de type HDI (diisocyanate d'hexaméthylène), IPDI (diisocyanate d'isophorone) ou un mélange des deux. Ces formulations de vernis sont celles habituellement utilisées dans la finition des peintures automobiles.

De cette manière, le procédé selon l'invention rend possible de produire industriellement des véhicules revêtus de peinture à finition mate. Le niveau de matité obtenu avec un procédé de peinture selon l'invention est compris entre 5 et 10 UB (Unités de Brillant) mesuré à 60°.

La surface finale du film de vernis sec présente du fait des agents de texture un relief (topographie) dont on peut mesurer les paramètres par profilométrie optique. Le film peut ainsi présenter des valeurs telles que ci-après :
Ra (Ecart moyen arithmétique des valeurs absolues des écarts du profil primaire à la ligne moyenne sur toute la surface d'évaluation) : entre 3 et 9 µm
Rz (Valeur moyenne des amplitudes (saillie/creux) des éléments du profil primaire sur l'aire d'évaluation. Le système exclut les régions autours des 10 plus grandes hauteurs et creux du profil afin de ne pas les considérer, ces dernières pouvant être des défauts de surface.) : entre 70 et 150 µm
Rz DIN (selon DIN 4768) : entre 25 et 55 µm.

En utilisant un tel vernis de finition texturé et matant sur une peinture, on noie la majeure partie des grains de poussière dans la texture et les défauts sont donc beaucoup moins critiquables car presque invisibles, voire inexistants. Il est ainsi possible de produire des véhicules à peinture mate à une cadence de production plus grande de 50 à 100 véhicules par jour, par exemple, et par ligne sans avoir le besoin de les retoucher unitairement hors flux comme cela était nécessaire au préalable.

Le procédé selon l'invention permet de disposer d'une solution industrielle permettant de commercialiser des carrosseries mates avec un prix de revient et un capacitaire peu différent d'une finition classique brillante.

Le procédé de peinture selon l'invention est un procédé de peinture de finition classique s'inscrivant dans un processus de peinture classique comprenant une étape d'application d'un revêtement de base ou d'un apprêt teinté à l'aide de pigments appliqué sur les parties extérieures du véhicule, la caisse et les intérieurs (entrées de portes, de volet, ...), une étape d'application de bases, par exemple acryliques, teintées par pigments conférant la teinte du véhicule, suivie d'une étape de séchage et de l'étape d'application du vernis. On procède ensuite à une étape de cuisson.

Ainsi, la finition mate du véhicule s'obtient dans ce procédé en appliquant un vernis liquide contenant les éléments matants et les éléments de texture.

L'invention concerne également un véhicule dont la peinture de caisse de finition mate et texturée est obtenue selon le procédé de l'invention.

On décrira maintenant un exemple de mise en œuvre du procédé selon l'invention.

Lors du processus de peinture de finition d'un véhicule automobile, on procède à une première étape d'application d'un revêtement de base ou d'un apprêt teinté à l'aide de pigments et qui confère des propriétés fonctionnelles ainsi qu'une protection aux UV. Les bases sont de type classique, liquides et appliquées par pulvérisation. Cette base ou cet apprêt est appliqué sur les parties extérieures du véhicule, la caisse et les intérieurs (entrées de portes, de volet, ...). Puis, on applique des bases, par exemple acryliques, teintées par pigments conférant la teinte au véhicule.

On procède ensuite à une étape de séchage des bases appliquées pendant 6 minutes à 70°C, par exemple, encore appelée étape de matage et qui permet l'évaporation des solvants ou de l'eau dans le cas de peinture hydrodiluable. Cette étape est inutile dans le cas de peinture solvantée.

Une fois un refroidissement obtenu, on applique un vernis liquide du type mono ou bi-composant (vernis + durcisseur) dans lequel se trouvent également des agents matants et des agents de texture tels que des billes de polyamide. L'application de ce vernis s'effectue de manière standard sur la même ligne de peinture et avec les mêmes installations de pulvérisation que celles permettant d'appliquer un vernis standard conférant un aspect habituellement brillant à la base colorée.

Il est possible ainsi, à l'aide de la même base colorée, d'obtenir dans la même cabine d'application, soit un aspect texturé mat, soit un aspect lisse brillant.

On procède ensuite à une étape de cuisson à 140°C pendant 20 min.

Un tel procédé de peinture permet donc la réalisation de véhicule à aspect mat dans une ligne de peinture équivalente à la ligne de peinture permettant d'obtenir des véhicules à l'aspect brillant. De plus, un tel procédé de peinture qui utilise un vernis à effet de texture permet de réaliser ces véhicules à l'aspect mat sans qu'il soit besoin de procéder à des retouches en ligne, l'effet texturé du vernis permettant de masquer les défauts éventuels de surface.

## Revendications

1. Procédé de peinture de caisse de véhicule automobile, ladite caisse présentant des défauts de surface, le procédé comprenant au moins les étapes selon lesquelles on applique à une caisse de véhicule au moins une base conférant la teinte, puis on applique un vernis comprenant des agents matants conférant une finition mate et des agents de texture, **caractérisé en ce qu'**on utilise un vernis liquide renfermant en tant qu'agents de texture des billes de polyamide qui sont solides, générant un relief à la surface du film peinture, créant la finition d'aspect texturé qui masque des défauts de surface de ladite caisse.

2. Procédé selon la revendication 1, **caractérisé en ce que** les agents de texture sont constitués de deux types de particules dont les granulométries sont typiquement les suivantes pour la particule 1 : 10% de particules de diamètre inférieur à 15µm ; 50 % de particules avec un diamètre inférieur à 41µm ; 90% de particules avec un diamètre inférieur à 75µm et pour la particule 2 : 10% de particules avec un diamètre inférieur à 9µm ; 50% de particules avec un diamètre inférieur à 51µm ; 90% de particules avec un diamètre inférieur à 91µm.

3. Procédé selon la revendication 2, **caractérisé en ce que** les agents de texture représentent pour la particule 1, 5 à 8% en poids total du vernis et pour la particule 2, 5 à 8% en poids total du vernis tandis que les agents matants représentent 3 à 5% en poids total du vernis.

4. Procédé selon l'une des revendications 1 à 3, **caractérisé en ce que** les agents matants sont constitués de silice.

5. Procédé selon l'une des revendications 1 à 4, **caractérisé en ce que** le vernis est un vernis à mono composant.

6. Procédé selon l'une des revendications 1 à 4, **caractérisé en ce que** le vernis est un vernis bi-composant comprenant une résine et un durcisseur.

7. Véhicule automobile dont la peinture de caisse est de finition mate et texturée obtenue par le procédé selon l'une des revendications 1 à 6, **caractérisé en ce que** ladite caisse présente des défauts de surface et **en ce que** ladite peinture masque les défauts de surface de ladite caisse.

## Patentansprüche

1. Lackierverfahren einer Kraftfahrzeugkarosserie, wobei die Karosserie Oberflächenmängel aufweist, wobei das Verfahren mindestens die Schritte umfasst, gemäß welchen auf einer Fahrzeugkarosserie mindestens eine Basis aufgetragen wird, die den Farbton verleiht, dann ein Lack aufgetragen wird, der mattierende Mittel umfasst, die eine matte Endfertigung verleihen, und Texturmittel, **dadurch gekennzeichnet, dass** ein Flüssiglack verwendet wird, der als Texturmittel Polyamidkügelchen einschließt, die fest sind, die ein Relief an der Oberfläche des Lackfilms erzeugen, das die Endfertigung mit texturiertem Aspekt schafft, die die Oberflächenmängel der Karosserie maskiert.

2. Verfahren nach Anspruch 1, **dadurch gekennzeichnet, dass** die Texturmittel aus zwei Typen von Teilchen bestehen, deren Korngrößen typischerweise für das Teilchen 1: 10 % Teilchen mit einem Durchmesser kleiner als 15 µm; 50 % Teilchen mit einem Durchmesser kleiner als 41 µm; 90 % Teilchen mit einem Durchmesser kleiner als 75 µm beträgt, und für das Teilchen 2: 10 % Teilchen mit einem Durchmesser kleiner als 9 µm; 50 % Teilchen mit einem Durchmesser kleiner als 51 µm 90 % Teilchen mit einem Durchmesser kleiner als 91 µm.

3. Verfahren nach Anspruch 2, **dadurch gekennzeichnet, dass** die Texturmittel für das Teilchen 1, 5 bis 8 Gew.-% insgesamt des Lacks darstellen, und für das Teilchen 2, 5 bis 8 % des Gesamtgewichts des Lacks, während die mattierenden Mittel 3 bis 5 Gew.-% insgesamt des Lacks darstellen.

4. Verfahren nach einem der Ansprüche 1 bis 3, **dadurch gekennzeichnet, dass** die mattierendes Mittel aus Siliziumdioxid bestehen.

5. Verfahren nach einem der Ansprüche 1 bis 4, **dadurch gekennzeichnet, dass** der Lack ein Einkomponentenlack ist.

6. Verfahren nach einem der Ansprüche 1 bis 4, **dadurch gekennzeichnet, dass** der Lack ein Zweikomponentenlack ist, der ein Harz und ein Härtemittel umfasst.

7. Kraftfahrzeug, dessen Karosserielack matte und texturierte Endfertigung durch das Verfahren nach einem der Ansprüche 1 bis 6 erhalten wird, **dadurch gekennzeichnet, dass** die Karosserie Oberflächenmängel aufweist, und dass der Lack die Oberflächenmängel der Karosserie maskiert.

## Claims

1. A process for painting a motor vehicle body, said body having surface defects, the process including at least the steps according to which there is applied to a vehicle body at least one base imparting the colour, then a varnish is applied including matting agents imparting a matt finish, and texturing agents, **characterized in that** a liquid varnish is used, including as texturing agents beads of polyamide which are solid, generating a relief to the surface of the paint film, creating the finish having a textured appearance which masks surface defects of said body.

2. The process according to Claim 1, **characterized in that** the texturing agents are constituted by two types of particles, the grain sizes of which are typically the following, for particle 1 : 10 % of particles of diameter less than 15 µm; 50 % of particles with a diameter less than 41 µm; 90 % of particles with a diameter less than 75 µm, and for particle 2 : 10 % of particles with a diameter less than 9 µm; 50 % of particles with a diameter less than 51 µm; 90 % of particles with a diameter less than 91 µm.

3. The process according to Claim 2, **characterized in that** the texturing agents represent for particle 1, 5 to 8 % of total weight of the varnish and for particle 2, 5 to 8 % of total weight of the varnish, while the matting agents represent 3 to 5 % of total weight of the varnish.

4. The process according to one of Claims 1 to 3, **characterized in that** the matting agents are made of silica.

5. The process according to one of Claims 1 to 4, **characterized in that** the varnish is a mono-component varnish.

6. The process according to one of Claims 1 to 4, **characterized in that** the varnish is a bi-component varnish including a resin and a hardener.

7. A motor vehicle, the body painting of which is of matt and textured finish obtained by the process according to one of Claims 1 to 6, **characterized in that** said body has surface defects and **in that** said painting masks the surface defects of said body.
